# EUROPÄISCHE PATENTSCHRIFT

(11) **EP 1 381 101 B1**
(45) Veröffentlichungstag und Bekanntmachung des Hinweises auf die Patenterteilung: **02.12.2009**
(21) Anmeldenummer: 03015736.6
(22) Anmeldetag: 10.07.2003
(51) Int. Cl.: H01M 8/02, H01M 8/24

(54) **Fluidverteilungsvorrichtung und Verfahren zur Herstellung einer Fluidverteilungsvorrichtung**
Fluid delivery system and method of producing a fluid delivery system
Système de distribution de fluide et méthode de fabrication d'un système de distribution de fluide

(30) Priorität: 11.07.2002 DE 10232129
(43) Veröffentlichungstag der Anmeldung: 14.01.2004
(73) Patentinhaber: Deutsches Zentrum für Luft- und Raumfahrt e.V., 51147 Köln (DE)
(72) Erfinder: Kaz, Till, 70186 Stuttgart (DE); Gülzow, Erich, 71032 Böblingen (DE); Wagner, Norbert, Dr., 71065 Sindelfingen (DE)
(74) Vertreter: Hoeger, Stellrecht & Partner Patentanwälte

(56) Entgegenhaltungen:
- WO-A-01/28019
- WO-A-01/28020
- GB-A- 2 359 186

## Beschreibung

Die Erfindung betrifft eine Fluidverteilungsvorrichtung für eine elektrochemische Elektrode.

Derartige Fluidverteilungsvorrichtungen werden beispielsweise im Zusammenhang mit Elektroden-Membran-Einheiten einer Brennstoffzelle eingesetzt, um Reaktionsgase flächig auf den jeweils zugeordneten Elektroden zu verteilen, das heißt beispielsweise bei einer Membran-Brennstoffzelle (PEFC) der Kathode reinen Sauerstoff oder Luftsauerstoff als Oxidans und der Anode Wasserstoff als Brennstoff zuzuführen. Bei einer Direkt-Methanol-Brennstoffzelle (DMFC) wird über eine Fluidverteilungsvorrichtung üblicherweise ein Methanol-Wasser-Gemisch einer Elektrode zugeführt.

Darüber hinaus wird durch solche Fluidverteilungsvorrichtungen nicht verbrauchtes Reaktionsgas abgeführt und Reaktionsprodukte (bei der Membran-Brennstoffzelle Wasser) werden abgeführt.

GB 2 359 186 und WO 01/28020 offenbaren Fluidverteilungsvorrichtungen nach dem Stand der Technik.

Der Erfindung liegt die Aufgabe zugrunde, eine Fluidverteilungsvorrichtung für eine elektrochemische Elektrode zu schaffen, mittels welcher sich eine optimierte Reaktionsgaszuführung zu einer Elektrode erreichen läßt.

Diese Aufgabe wird erfindungsgemäß dadurch gelöst, daß ein gasdichter Träger vorgesehen ist, welcher auf mindestens einer Seite eine Beschichtung aus einem porösen Material trägt, wobei in der Beschichtung eine Mehrzahl von makroskopischen Strömungskanälen gebildet ist.

Über die makroskopischen Strömungskanäle läßt sich die zugeordnete Elektrode großflächig mit Reaktionsgas beaufschlagen. Über die Beschichtung aus dem porösen Material sind zusätzlich mesoskopische oder mikroskopische Kanäle gebildet, mittels welchen sich eine Feinverteilung des Reaktionsgases erreichen läßt. Im wesentlichen wirkt dann die gesamte Seite der Fluidverteilungsvorrichtung, welche der zugeordneten Elektrode zugewandt ist, als Verteilungsstruktur, da zum einen über insbesondere offene Kanäle eine Fluidversorgung der Elektrode möglich ist, aber auch über die Zwischenbereiche zwischen den Kanälen über die Porenstruktur eine Fluidversorgung möglich ist.

Darüber hinaus wirkt die poröse Schicht als Puffer, in welcher sich in bestimmtem Maße Reaktionsgas und auch Wasser speichern läßt. Es lassen sich dann Spitzen bezüglich Reaktionsgasüberversorgung oder Reaktionsgasunterversorgung abfangen, da eben ein Übermaß an Reaktionsgas durch die Beschichtung aufnehmbar ist und bei Unterversorgung eine Reaktionsgasversorgung aus der Beschichtung heraus möglich ist. Weiterhin läßt sich auf diese Weise durch in der Beschichtung gespeichertes Wasser eine Befeuchtung von Reaktionsgas zur Befeuchtung der Membran bewirken, um auch so eine stabile Befeuchtung einer Brennstoffzelle (insbesondere deren Membran) weitgehend unabhängig von dem Betriebspunkt der Brennstoffzelle zu erreichen.

Aufgrund einer Feinverästelung der Kanäle in der porösen Schicht (mesoskopische oder mikroskopische Kanäle) kann unter Umständen auch auf Diffusionsschichten bei der zugeordneten Elektrode verzichtet werden, da eben die Fluidverteilungsvorrichtung bereits für die Feinverteilung über effektiv die gesamte Elektrodenoberfläche sorgt.

Durch das Vorsehen eines Trägers läßt sich eine Trennung bezüglich mechanischer Stabilisierung und Verteilungsfunktion der erfindungsgemäßen Fluidverteilungsvorrichtung erreichen. Der Träger selber dient als Haltestruktur für die Beschichtung, ohne daß er eine Verteilungsfunktion aufweisen muß. Es lassen sich dann auch Fluidverteilungsvorrichtungen herstellen, welche beispielsweise eine gekrümmte Oberfläche aufweisen, wenn diese einer gekrümmten Elektrodenoberfläche zugeordnet sind. Der Träger weist auch Öffnungen zur Einkopplung von Reaktionsgas in die/ Auskopplung von Reaktionsgas aus den Strömungskanälen auf. Durch die Beschichtung läßt sich ein hervorragender elektrischer Kontakt zur Elektrode herstellen, da die Beschichtung sich mit im wesentlichen gleichen Eigenschaften wie die Elektrode ausbilden läßt.

Die erfindungsgemäße Fluidverteilungsvorrichtung läßt sich auch auf einfache und kostengünstige Weise herstellen, da die Beschichtung auf einfache Weise, beispielsweise mittels Walzen oder Sprühen auf den Träger aufbringbar ist und dann die makroskopischen Strömungskanäle in definierter Strukturdimensionierung beispielsweise mittels einer Prägewalze integral herstellbar sind. Die Prägewalze kann also dann für eine Aufwalzung der Beschichtung und gleichzeitig Ausbildung der makroskopischen Strömungskanäle sorgen.

Insbesondere ist es vorteilhaft, wenn der Träger aus einem elektrisch leitenden Material hergestellt ist. Es läßt sich dann eine Bipolarplatte ausbilden, wobei dann vorzugsweise auf beiden Seiten des Trägers eine Beschichtung mit jeweiligen makroskopischen Strömungskanälen vorgesehen ist. Eine solche Fluidverteilungsvorrichtung läßt sich dann mit miteinander zugewandten Elektroden und Kathoden benachbarter Elektroden-Membran-Einheiten verbinden.

Insbesondere ist dabei der Träger aus einem Material hergestellt, welches bezüglich eingesetzter Reaktionsgase inert ist. Da beispielsweise der Kathode einer Membran-Brennstoffzelle Sauerstoff zugeführt wird, sollte der Träger nicht oxidativ zersetzbar sein.

Insbesonders vorteilhaft ist es, wenn die Strömungskanäle zu einer Elektrodenseite hin offen sind, um so eine großflächige Reaktionsgasverteilung auf der Elektrode zu erhalten.

Üblicherweise ist in einem Strömungskanal eine laminare Strömung eines Fluids ausbildbar, insbesondere weil die Strömungsgeschwindigkeiten relativ gering sind, so daß die Reynolds-Zahlen unterhalb eines Schwellenwertes zum Umschlag in turbulenter Strömung liegen.

Es ist dann ganz besonders vorteilhaft, wenn in dem Strömungskanal mindestens eine Strömungsleiteinrichtung vorgesehen ist, welche derart angeordnet und ausgebildet ist, daß sie in der laminaren Strömung eine räumliche Umschichtung von Fluidschichten bewirkt. Dadurch läßt sich dem Aufbauen von Konzentrationsgradienten entgegenwirken, beispielsweise wenn Sauerstoff als Luftsauerstoff einer Kathode zugeführt wird. In diesem Zusammenhang wird auf die DE 100 56 673 A1 des gleichen Anmelders verwiesen, in der derartige Strömungsleiteinrichtungen und ihre Funktionsweise beschrieben sind.

Die erfindungsgemäße Fluidverteilungsvorrichtung läßt sich auf einfache Weise herstellen, wenn die Strömungskahäle durch Materialkomprimierung und/oder Materialabtragung gebildet sind.

Weiterhin ist es günstig, wenn die Strömungskanäle durch Prägung gebildet sind. Mittels einer Prägewalze lassen sich dann entsprechende Kanalstrukturen einer gewünschten räumlichen Dimensionierung erzeugen, wobei gleichzeitig eine Beschichtung aufwalzbar ist.

Weiterhin ist es günstig, wenn ein Querschnitt eines Strömungskanals erheblich größer ist als eine mittlere Porengröße in der Beschichtung. Dadurch läßt sich über die Strömungskanäle eine großflächige Verteilung einschließlich Reaktionsgaszufuhr bzw. -abfuhr von unverbrauchtem Reaktionsgas erreichen, während dann eine Feinverteilung über die Beschichtung möglich ist. Insbesondere sollten die Querabmessungen eines Strömungskanals um einen Faktor 1000 oder mehr größer sein als die eines mikroskopischen oder mesoskopischen Kanals.

Insbesondere ist ein Strömungskanal durch das Porensystem der Beschichtung begrenzt, das heißt über Strömungskanalwände kann das Porensystem der Beschichtung Reaktionsgase aufnehmen und auch wieder abgeben. Dadurch wiederum ist eine feinverteilte Zuführung von Reaktionsgas zu einer zugeordnete Elektrode möglich. Aus dem gleichen Grund ist es vorteilhaft, wenn Wände eines Strömungskanals aus einem porösen Material sind.

Es kann vorgesehen sein, daß ein Strömungskanal einen Kanalgrund aufweist, welcher in einem Abstand zu dem Träger liegt. Dadurch ist zum einen die Herstellung erleichtert, da die Einprägung eines Strömungskanals erleichtert ist. Zum anderen ist es dadurch möglich, eine Grundschicht auf dem Träger aufzubauen, die dann als Haftschicht für die weitere Beschichtung mit dem porösen Material dienen kann oder auch so ausgebildet seien kann, daß sie andere Eigenschaften wie die restliche Beschichtung aufweist.

Insbesondere umfaßt dann die Beschichtung eine Grundschicht, welche auf dem Träger angeordnet ist. Diese kann beispielsweise hydrophil ausgebildet sein, um ein Wasserreservoir zur gleichmäßigen Befeuchtung von Reaktionsgas bereitstellen zu können.

Ganz besonders vorteilhaft ist es, wenn das Porensystem der Beschichtung eine Pufferwirkung für Reaktionsgas und/oder Reaktionsprodukte aufweist. Das Porensystem kann Reaktionsgas speichern und damit Spitzen bezüglich Überversorgung oder Unterversorgung abfangen. Ebenso läßt sich dadurch eine gleichmäßigere Befeuchtung von Reaktionsgas erreichen, wenn entsprechend Wasser in der Beschichtung gespeichert wird.

Vorzugsweise ist das Beschichtungsmaterial aus einer Mischung hergestellt, welche Kohlenstoff und Bindemittel umfaßt. Über Kohlenstoff, beispielsweise in der Form von vulkanisierten Rußteilchen, läßt sich eine elektrische Leitfähigkeit für die Beschichtung herstellen, wobei das Bindemittel die Kohlenstoffteilchen zusammenhält. Darüber hinaus können auch noch Porenbildner vorgesehen sein, um so insbesondere für eine definierte Porenbildung in der Beschichtung zu sorgen.

Weiterhin kann es vorgesehen sein, daß die Mischung Hydrophobierungsmittel umfaßt. Diese können dabei in bestimmten Bereichen angeordnet sein, so daß die Beschichtung bestimmte hydrophobe Bereiche aufweist, in die kein Wasser einlagerbar ist.

Es kann auch vorgesehen sein, daß die Mischung hydrophile Mittel umfaßt, welche insbesondere ebenfalls in bestimmten Bereichen angeordnet sind. Dadurch lassen sich Bereiche in der Beschichtung ausbilden, die Wasser aufnehmen können und damit als Wasserspeicher dienen können. Über solche sumpfartige Bereiche läßt sich eine gleichmäßige Befeuchtung einer Membran einer Elektroden-Membran-Einheit bewirken.

Gans besonders vorteilhaft ist es, wenn die Beschichtung auf dem Träger ein elektrisch leitendes Material umfaßt, insbesondere wenn der Träger ebenfalls aus einem elektrisch leitenden Material hergestellt ist. Es läßt sich dann über die Fluidverteilungsvorrichtung eine elektrische Verbindung nach außen herstellen.

Es ist vorteilhaft, wenn die Beschichtung einen Werkstoff umfaßt und/oder die Fluidverteilungsvorrichtung derart aufgebaut ist, daß Reaktionsgas von Katalysatorgiften elektrochemisch reinigbar ist. Es läßt sich dann auf diese Weise beispielsweise in dem Reaktionsgas enthaltenes Kohlenmonoxid katalytisch in Kohlendioxid umwandeln, um so eine Elektrodenvergiftung zu verhindern.

Es kann vorgesehen sein, daß Abmessungen der Strömungskanäle und/oder die Porosität der Beschichtung räumlich variieren. Durch eine entsprechende Gradierung lassen sich dann die Eigenschaften der Fluidverteilungsvorrichtung optimiert an die zugeordnete Elektrode anpassen. Beispielsweise kann dadurch erreicht werden, daß ein bestimmter Teil einer Elektrodenfläche mit mehr Reaktionsgas versorgt wird als ein anderer Teil. Dies kann beispielsweise sinnvoll sein, um zu stark Inhomogenitäten in der Stromdichteverteilung auf der Elektrode zu verhindern: Beispielsweise wird in einem Bereich, in dem Reaktionsgas der Elektrode zugeführt wird, mengenmäßig weniger Reaktionsgas zugeführt als in einem Bereich, in dem nichtverbrauchtes Reaktionsgas abgeführt wird.

Vorteilhafterweise ist die erfindungsgemäße Fluidverteilungsvorrichtung als Bipolarplatte ausgebildet, so daß sie zwischen benachbarten Elektroden-Membran-Einheiten gesetzt werden kann. Sie sorgt damit gleichzeitig für den elektrischen Kontakt und die Fluidzuführung zu den benachbarten Anoden und Kathoden.

Insbesondere ist dann beidseitig des Trägers eine Beschichtung mit darin angeordneten makroskopischen Strömungskanälen vorgesehen, um so gegenüberliegende Anoden und Kathoden benachbarter Elektroden-Membran-Einheiten mit dem jeweiligen Reaktionsgas (Sauerstoff als reiner Sauerstoff oder Luftsauerstoff bzw. Wasserstoff) zu versorgen.

Die erfindungsgemäße Fluidverteilungsvorrichtung kann von einer Brennstoffzelle oder einem Brennstoffzellenstapel mit mindestens einer Elektroden-Membran-Einheit umfaßt sein, wobei die Elektroden mit einer Fluidverteilungsvorrichtung verbunden sind.

Die Erfindung betrifft ferner ein Verfahren zur Herstellung einer Fluidverteilungsvorrichtung für eine elektrochemische Elektrode.

Es liegt dabei die Aufgabe zugrunde, ein solches Verfahren zu schaffen, mit dem sich auf einfache Weise eine Fluidverteilungsvorrichtung herstellen läßt, über welche sich eine optimierte Fluidverteilung erreichen läßt.

Diese Aufgabe wird erfindungsgemäß dadurch gelöst, daß auf einem gasdichten Träger eine Beschichtung aus einem porösen Material aufgebracht wird und in die Beschichtung eine Mehrzahl von makroskopischen Strömungskanälen durch Materialkomprimierung und/oder Materialabtragung eingebracht wird.

Das erfindungsgemäße Verfahren weist die bereits im Zusammenhang mit der erfindungsgemäßen Fluidverteilungsvorrichtung erwähnten Vorteile auf.

Weitere vorteilhafte Ausführungsformen wurden ebenfalls bereits im Zusammenhang mit der erfindungsgemäßen Fluidverteilungsvorrichtung erläutert.

Insbesondere ist es vorteilhaft, wenn die Strömungskanäle eingeprägt werden und vorteilhafterweise mittels einer Prägewalze hergestellt werden. Durch eine solche Prägewalze läßt sich gleichzeitig die Beschichtung aufwalzen und dabei lassen sich die Strömungskanäle herstellen.

Ferner ist es dann günstig, wenn bei der Herstellung der Strömungskanäle Strömungsleiteinrichtungen in diesen hergestellt werden; es läßt sich dann bei laminarer Strömung des Reaktionsgases in diesen Strömungskanälen eine räumliche Umschichtung bewirken, wobei integral mit der Herstellung der Strömungskanäle gleichzeitig Strömungsleiteinrichtungen hergestellt werden und insbesondere eingeprägt werden.

Die Beschichtung kann dabei auf den Träger aufgewalzt oder aufgesprüht werden.

Die nachfolgende Beschreibung bevorzugter Ausführungsformen dient im Zusammenhang mit der Zeichnung der näheren Erläuterung der Erfindung. Es zeigen:
- Figuren 1a, 1b: schematisch die Herstellung einer erfindungsgemäßen Fluidverteilungsvorrichtung, wobei in Figur 1a das Halbprodukt mit einer auf einem Träger angeordneten Beschichtung gezeigt ist und in Figur 1b das fertiggestellte Produkt in Schnittansicht;
- Figur 2: eine schematische perspektivische Darstellung eines Ausführungsbeispiels eines Herstellungsverfahrens zur Herstellung des Halbprodukts gemäß Figur 1a und der Fluidverteilungsvorrichtung gemäß Figur 1b ; und
- Figur 3: eine Ausbildung einer erfindungsgemäßen Fluidverteilungsvorrichtung als Bipolarplatte, welche zwischen benachbarten Elektroden-Membran-Einheiten angeordnet ist.

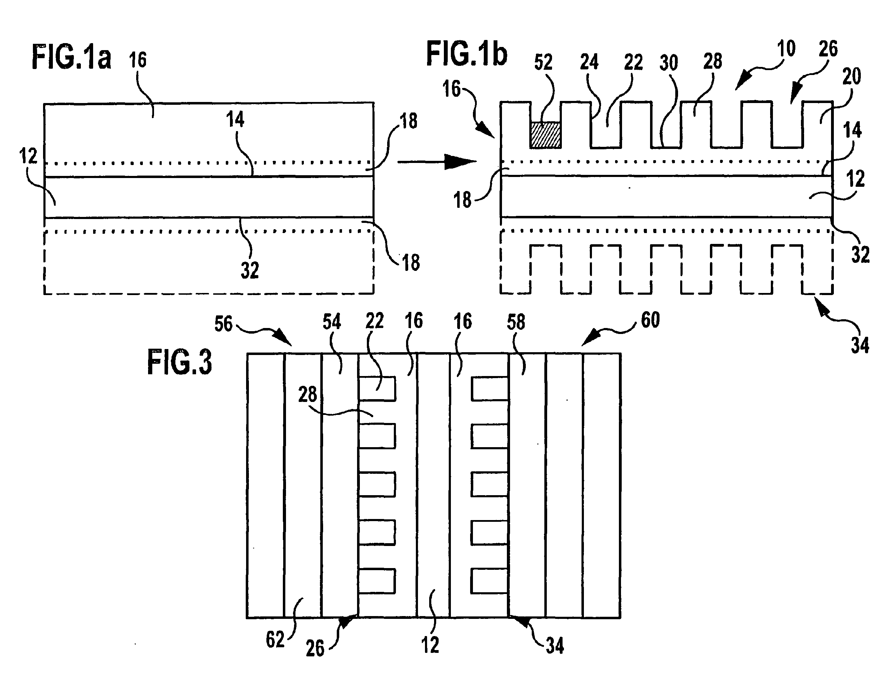

Ein Ausführungsbeispiel einer erfindungsgemäßen Fluidverteilungsvorrichtung, welche in Figur 1b als Ganzes mit 10 bezeichnet ist, umfaßt einen Träger 12 aus einem gasdichten Material. Der Träger 12 kann eine ebene Oberfläche 14 oder eine gekrümmte Oberfläche aufweisen, welche an eine Elektrode angepaßt ist, welche mit der Fluidverteilungsvorrichtung 10 insbesondere mit Reaktionsgas zu versorgen ist.

Das Material des Trägers 12 ist chemisch inert bezüglich Oxidationsreaktionen, da beispielsweise bei Brennstoffzellen Sauerstoff als Reaktionsgas einer Kathode zugeführt wird.

Bei dem Träger 12 kann es sich beispielsweise um einen Metallträger wie eine Blechplatte, einen Graphitträger oder einen Polymerträger handeln. Vorzugsweise ist der Träger 12 dabei elektrisch leitend, insbesondere, wenn die Fluidverteilungsvorrichtung 10 als Bipolarplatte ausgebildet ist.

Der Träger 12 trägt eine Beschichtung 16. Diese umfaßt bei einer Variante eines Ausführungsbeispiels eine Grundschicht 18, welche über die Oberfläche 14 mit dem Träger 12 verbunden ist. Diese Grundschicht 18 ist insbesondere dünner ausgebildet ist als der restliche Teil der Beschichtung 16. Die Beschichtung 16 kann aber auch einheitlich ausgebildet sein. Die Oberfläche 14 kann glatt oder strukturiert sein; die Struktur kann beispielsweise makroskopische Strömungskanäle umfassen. Der Träger 12 kann auch als Kühlungsträger ausgebildet sein, indem er insbesondere Kühlkanäle oder dergleichen aufweist.

Die Beschichtung 16 umfaßt ferner eine auf der Grundschicht 18 aufgebaute poröse Schicht 20 mit einem mesoskopischen oder mikroskopischen Porensystem. (Auch die Grundschicht 18 kann ein Porensystem umfassen.) Diese poröse Schicht 20 ist beispielsweise aus einer Mischung von Kohlenstoff, insbesondere in der Form von vulkanisiertem Ruß, und einem Bindemittel wie PTFE (Polytetrafluorethylen) hergestellt. Sie kann auch ein Hydrophobierungsmittel umfassen, wobei PTFE hydrophobierend wirkt, und weitere Zusatzwerkstoffe wie Porenbilder.

Die poröse Schicht 20 erlaubt über das Porensystem eine Gasleitung innerhalb der Schicht 20. Typische Porengrößen liegen dabei im Bereich von 30 nm entsprechend einer mittleren Kohlenstoffpartikelgröße. Bei diesen Größenordnungen spricht man von Mesoporen, während Mikroporen eine Größe von 3 mm oder kleiner aufweisen.

Ebenso kann die Beschichtung 16 als Reservoir, beispielsweise für Wasser dienen, um so für eine weitgehend betriebspunktunabhängige Befeuchtung einer Membran einer Elektroden-Membran-Einheit zu sorgen. Dadurch lassen sich beispielsweise Spitzen als Reaktionsgasüberversorgung oder Reaktionsgasunterversorgung und Befeuchtung als Unterversorgung oder Überversorgung abfangen und damit die Lebensdauer einer Elektroden-Membran-Einheit, an welcher die Fluidverteilungsvorrichtung 10 angeordnet ist, erhöhen.

Da die Schicht 20 ein Porensystem mit einer entsprechenden Feinverästelung aufweist, kann dann auch auf Diffusionsschichten an der Elektrode, an welcher die Fluidverteilungsvorrichtung 10 angeordnet ist, verzichtet werden. Die poröse Schicht 20 bildet selber feinverästelte mesoskopische oder mikroskopische Kanäle aus, in welchen Reaktionsgas und Reaktionsprodukte aufnehmbar sind.

Es kann auch vorgesehen sein, daß die Beschichtung 16 ein hydrophiles Material umfaßt, wobei beispielsweise in Teilbereichen hydrophobes Material angeordnet ist und in anderen Teilbereichen hydrophiles Material. Über eine entsprechende hydrophile Mischung läßt sich dann sumpfartig in einem großen Oberflächenbereich Wasser sammeln, um so ein Wasserreservoir auszubilden und beispielsweise für eine stabile Befeuchtung von Reaktionsgasen bei der Zuführung zu den jeweiligen Elektroden zu sorgen. Insbesondere ist dabei die Grundschicht 18 hydrophil aufgebaut, während die poröse Schicht 20 hydrohpbierend ist.

Neben den feinverästelten Kanälen in der porösen Schicht 20 und der Grundschicht 18 sind in der Beschichtung 16 makroskopische Strömungskanäle 22 gebildet, über welche Reaktionsgas, nämlich Sauerstoff oder Luft zu einer Kathode und Wasserstoff zu einer Anode zugeführt wird, wenn über die Fluidverteilungsvorrichtung 10 eine Membran-Brennstoffzelle (PEFC) versorgt werden soll und über die Fluidverteilungsvorrichtung 10 die entsprechenden Reaktionsgase der entsprechenden Elektrode zugeführt werden sollen.

Die Strömungskanäle 22 sind durch Wände 24 begrenzt, welche in dem Porensystem der porösen Schicht 20 gebildet sind. Der Abstand zwischen gegenüberliegenden Wänden 24 ist dabei erheblich größer als der mittlere Durchmesser der Poren im Porensystem der porösen Schicht 20. Typische Größenordnungen für den Querschnitt solcher Querschnittskanäle 22, wenn diese rechteckig sind, sind in Breite und Tiefe jeweils 400 µm. Die Dicke der Beschichtung 16 über dem Träger liegt typischerweise bei 500 µm, wobei die Grundsicht 18 eine Dicke von 100 µm aufweist bzw. der Abstand von Kanalgründen 30 zum Träger 12 bei 100 µm liegt. Die Querabmessungen der makroskopischen Strömungskanäle liegen somit um einen Faktor von mehr als 10.000 über denen der mesoskopischen Kanäle in der porösen Schicht 20.

Über die Strömungskanäle 22 läßt sich Reaktionsgas mit großem Volumendurchfluß der jeweiligen Elektrode zuführen. Über die poröse Schicht 20 mit ihrer Porenstruktur ist für eine Feinverteilung gesorgt.

Die Strömungskanäle 22 sind dabei zu einer Elektrodenseite 26 hin offen, damit eine großflächige Beaufschlagung der Elektrode mit Reaktionsgas erfolgen kann, wobei, wie erwähnt, eine Feinverteilung über zwischen den Strömungskanälen 22 liegende Abstandselemente 28 der porösen Schicht 20 erfolgen. Diese Abstandselemente 28 wirken ebenfalls, wie bereits oben erwähnt, als Puffer für Reaktionsgas und Reaktionsprodukte, insbesondere Wasser.

Der Kanalgrund 30 der Strömungskanäle 22 weist einen Abstand zu der Oberfläche 14 des Trägers 12 auf. Auch die Grundschicht 18 kann porös ausgebildet sein und eine Pufferwirkung ausüben.

Zur Ausbildung einer Bipolarplatte kann auf einer der Oberfläche 14 abgewandten Oberfläche 32 des Trägers 12 ebenfalls eine Beschichtung mit einer Mehrzahl von makroskopischen Strömungskanälen angeordnet sein, so daß die eine Elektrodenseite 26 der Fluidverteilungsvorrichtung 10 mit einer Elektrodenseite einer Elektrode-Membran-Einheit verbindbar ist und die andere Elektrodenseite 34 der Fluidverteilungsvorrichtung mit der anderen Elektrode der Elektroden-Membran-Einheit.

Das Material der jeweiligen porösen Schichten 20 auf beiden Seiten des Trägers 12 kann dabei an die jeweilige Funktion angepaßt sein, das heißt angepaßt sein, ob eine Verbindung mit der Anode oder mit der Kathode vorgesehen ist.

Es kann auch noch vorgesehen sein, daß in die Beschichtung 16 ein Wirkstoff integriert ist, über welchen Reaktionsgase von Katalysatorgiften elektrochemisch reinigbar sind. Beispielsweise läßt sich über Wirkstoffe wie Eisen katalytisch eine Umwandlung von Kohlenmonoxid in Kohlendioxid durchführen, um eine Elektrodenvergiftung zu verhindern.

Es kann auch vorgesehen sein, daß das Reaktionsgas durch eine entsprechende poröse Schicht mit einem solchen Wirkstoff durchgeführt wird, bevor es in die Strömungskanäle 22 gelangt, um eben eine solche Reinigung durchzuführen.

Um die Fluidverteilungsvorrichtung 10 optimal anzupassen, kann es auch vorgesehen sein, daß die Strömungskanäle 22 in ihrer räumlichen Dimensionierung, insbesondere bezüglich Tiefe und/oder Abstand des Kanalgrundes 30 zu dem Träger 12 variieren. Darüber hinaus kann auch alternativ oder zusätzlich die Porosität der Beschichtung 16 räumlich variieren oder auch der Abstand der Grundschicht 18 zu dem Träger 12 kann räumlich variieren. Auf diese Weise kann die Fluidverteilungsvorrichtung 10 an die entsprechenden räumlichen Verhältnisse der Elektroden, mit welchen diese verbunden wird, angepaßt werden, um so auf eine optimale Fluidverteilung (einschließlich Abführung von unverbrauchten Reaktionsgasen und Reaktionsprodukten) zu sorgen.

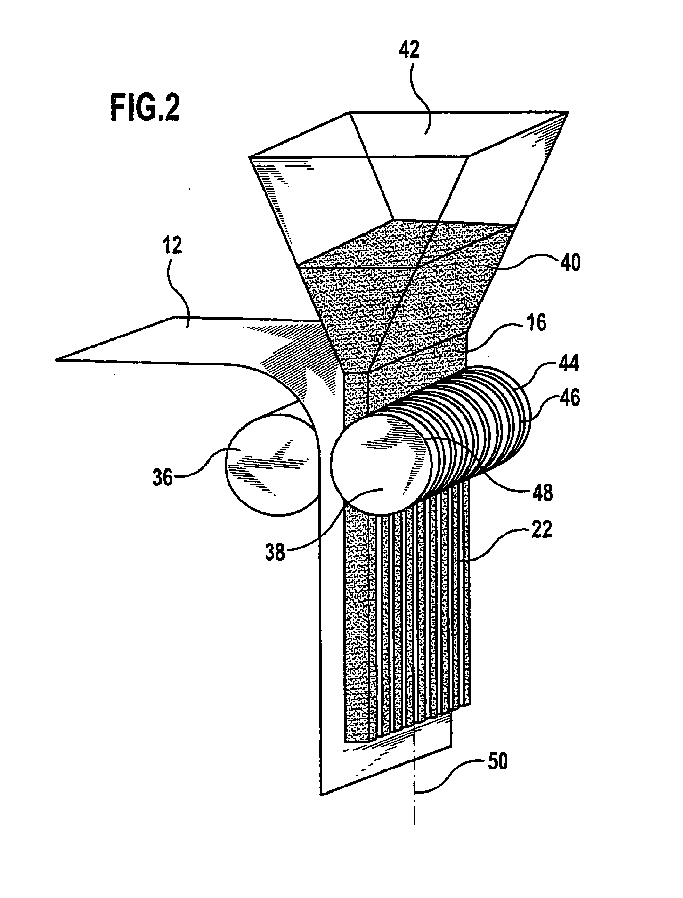

Die erfindungsgemäße Fluidverteilungsvorrichtung 10 wird, wie in den Figuren 1a und 1b und in der Figur 2 schematisch dargestellt, wie folgt hergestellt:

Auf den Träger 12, der auch flexibel ausgebildet sein kann, wird die Grundschicht 18 aufgesprüht oder aufgewalzt (in Figur 2 nicht gezeigt). Dies kann dabei auf einer Seite des Trägers 12 erfolgen oder auf beiden Oberflächen 14 und 32.

Auf die Grundschicht 18 wird dann die Beschichtung 16 aufgebracht und insbesondere aufgewalzt. Falls keine Grundschicht 18 vorgesehen ist, wird die Beschichtung 16 direkt auf den Träger 12 aufgewalzt. Beispielsweise ist dazu eine Gegenwalze 36 und eine Beschichtungswalze 38 vorgesehen, welche in Gegenrotation in der Art eines Kalanders angetrieben sind. Die Beschichtungswalze 38 walzt das Beschichtungsmaterial 40 auf den Träger 12 auf, wobei das Beschichtungsmaterial 40 beispielsweise aus einem Trichter 42 zugeführt wird.

Ein entsprechendes Verfahren ist im Zusammenhang mit der Herstellung einer mehrschichtigen Elektrode oder Elektrodenverbundeinheit in der nicht-vorveröffentlichten deutschen Patentanmeldung Nr. 101 12 232.2 vom 7. März 2001 mit dem Titel "Verfahren zur Herstellung einer mehrschichtigen Elektrode oder Elektrodenverbundeinheit und Gasdiffusionselektrode" des gleichen Anmelders beschrieben. Hierauf wird ausdrücklich Bezug genommen.

Die Beschichtungswalze 38 weist eine Oberflächenstruktur 44 auf, mittels welcher sich durch Materialkomprimierung und/oder Materialabhebung die Strömungskanäle 22 in die Beschichtung 16 einprägen lassen.

Beispielsweise umfaßt die Oberflächenstruktur 44 beabstandete Ringelemente 46, welche über eine Zylinderfläche 48 der Beschichtungswalze 38 hinausstehen und sich dadurch in die Beschichtung 16 eingraben können und die Strömungskanäle 22 prägen können. Bereiche zwischen den Ringelementen 46 sorgen für die Herstellung der Abstandselemente 28. Durch Querpressung der Ringelemente 46 werden die makroskopischen Strömungskanäle 22 hergestellt.

Mittels entsprechender Anordnung und Ausbildung der Ringelemente 46 lassen sich definierte Strömungskanäle 22 mit definierter Kanaltiefe und definiertem Abstand zueinander erzeugen. Die Strömungskanäle 22 werden dabei in einer Längsrichtung 50 des Trägers 12 entsprechend einer Transportrichtung des Trägers 12 zwischen den beiden Walzen 36 und 38 erzeugt.

Durch Aufwalzen der Beschichtung 16 wird also die Porenstruktur mit den feinverästelten mesoskopischen oder mikroskopischen Kanälen erzeugt, während durch Prägung mittels der Beschichtungswalze 38 (Prägewalze 38) die makroskopischen Strömungskanäle 22 erzeugt werden.

Auf der gegenüberliegenden Seite des Trägers 12 kann ebenfalls eine Prägewalze vorgesehen sein (in Figur 2 nicht gezeigt), um so Strömungskanäle 22 auf beiden Seiten des Trägers 12 in den jeweiligen Beschichtungen dort zu erzeugen. Die Prägewalzen auf beiden Seiten des Trägers 12 können dabei unterschiedliche Strömungskanalstrukturen in den jeweiligen Beschichtungen 16 erzeugen.

Bei einer Variante einer Ausführungsform ist es vorgesehen, daß die Beschichtungswalze eine derartige Oberflächenstruktur 44 aufweist, daß in den Strömungskanälen 22 Strömungsleiteinrichtungen 52 gebildet sind, wie in Figur 1b angedeutet.

Es ist vorgesehen, daß Reaktionsgas in den jeweiligen Strömungskanälen 22 laminar strömt, das heißt in laminarer Strömung auf die entsprechenden Oberflächen der zugeordneten Elektrode verteilt wird. Da in der Praxis die Strömungsgeschwindigkeiten relativ klein sind (in der Größenordnung höchstens wenigen m/s) ergeben sich niedrige Reynolds-Zahlen, so daß sich sehr stabile laminare Fluidströmungen ausbilden können.

Da aber keine turbulente Durchmischung der Reaktionsgase in den Strömungskanälen 22 stattfindet, ergibt sich ein Konzentrationsgradient der aufzunehmenden bzw. abzugebenden Substanz in dem Fluid; wird insbesondere Luft zugeführt mit Sauerstoff als Abgabesubstanz, dann verarmt die Luft in oberflächennahen, der Elektrodenseite 26 zugewandten Bereichen an Luftsauerstoff. Da in dem Strömungskanal 22 dann Sauerstoff über die einzelnen Fluidschichten der laminaren Strömung im wesentlichen nur durch Diffusion quer zur Richtung der Laminarströmung transportiert werden kann, ist die Abgabe von Luftsauerstoff durch die laminar strömende Luft gehemmt.

Es werden nun mittels Prägung mit der Beschichtungswalze bzw. Prägewalze 38 Strömungsleiteinrichtungen 52 in den Strömungskanälen 22 gebildet, welche derart angeordnet und derart ausgebildet sind, daß sie in der laminaren Strömung eine räumliche Umschichtung von Fluidschichten bewirken und dabei insbesondere so wirken, daß Fluidschichtströme aus der der Abgabeoberfläche des Fluids entfernter liegenden Bereiche in der Elektrodenseite 26 näherliegende Bereiche umgelenkt werden.

Derartige Strömungsleiteinrichtungen sind in der DE 100 56 673 A1 beschrieben, auf die hiermit ausdrücklich Bezug genommen wird.

Durch entsprechende Ausbildung der Oberflächenstruktur 44 der Beschichtungswalze 38 lassen sich solche Strömungsleiteinrichtungen 52 während der Prägung der Strömungskanäle 22 herstellen, beispielsweise als keilförmige Elemente oder spiralförmige Elemente. Es wird hier wieder auf die DE 100 56 673 A1 Bezug genommen. Strömungseinrichtungen 52 können auch noch durch nachträgliche spanabhebende Materialbearbeitung hergestellt werden.

Die erfindungsgemäße Fluidverteilungsvorrichtung 10 läßt sich, wie in Figur 3 gezeigt, als Bipolarplatte einsetzen, wenn auf beiden Seiten des Trägers 12 entsprechende Beschichtungen 16 mit makroskopischen Strömungskanälen 22 angeordnet sind. Die Elektrodenseite 26 wird dazu beispielsweise mit einer Kathode 54 einer Elektroden-Membran-Einheit 56 verbunden. Die Elektrodenseite 34 wird mit einer Anode 58 einer benachbarten Elektroden-Membran-Einheit 60 verbunden.

In den Elektroden-Membran-Einheiten 56, 60 sind dabei die jeweiligen elektrochemischen Elektroden durch eine protonenleitende Membran 62 gasdicht getrennt.

Der gasdichte Träger 12 trennt dabei ebenfalls die einander zugewandten Kathoden 54 und Anoden 58 benachbarter Elektroden-Membran-Einheiten 56, 60, wobei bei der Herstellung des Trägers 12 aus einem elektrisch leitenden Material die beiden Brennstoffzellen elektrisch miteinander gekoppelt sind und sich so ein Brennstoffzellen-Stapel ausbilden läßt.

Über die Strömungskanäle 22 wird der Kathode 54 Luft oder reinen Sauerstoff zugeführt, wobei die makroskopischen Strömungskanäle 22 für die großflächige Verteilung sorgen und die Abstandselemente 28 in der porösen Schicht 20 für eine feinverästelte Verteilung über die mesoskopischen oder mikroskopischen Kanäle in der porösen Schicht 20 sorgen.

Dadurch wird auch die oben beschriebene Pufferwirkung erzielt, um so Überversorgungs- und Unterversorgungsspitzen abfangen zu können.

Darüber hinaus läßt sich Wasser in der Beschichtung 16 und insbesondere in der Grundschicht 18 speichern, insbesondere wenn in letzterer hydrophile Bereiche erzeugt werden, um so für eine gleichmäßige Befeuchtung der Reaktionsgase zu sorgen und damit für eine gleichmäßige Befeuchtung der Membrane 62 zu sorgen. Bildet sich nämlich ein Konzentrationsgradient im Wassergehalt aus, dann kann die Grundschicht Wasser nachliefern und das zu trockene Reaktionsgas anfeuchten.

## Patentansprüche

1. Fluidverteilungsvorrichtung für eine elektrochemische Elektrode (54; 58) mit einem gasdichten Träger (12), welcher auf mindestens einer Seite (14; 32) eine Beschichtung (16) aus einem porösen Material trägt, wobei in der Beschichtung (16) eine Mehrzahl von makroskopischen Strömungskanälen (22) gebildet ist.

2. Fluidverteilungsvorrichtung nach Anspruch 1, **dadurch gekennzeichnet, daß** der Träger (12) aus einem elektrisch leitenden Material hergestellt ist.

3. Fluidverteilungsvorrichtung nach Anspruch 1 oder 2, **dadurch gekennzeichnet, daß** der Träger (12) aus einem Material hergestellt ist, welches bezüglich eingesetzter Reaktionsgase chemisch inert ist.

4. Fluidverteilungsvorrichtung nach einem der vorangehenden Ansprüche, **dadurch gekennzeichnet, daß** die Strömungskanäle (22) zu einer Elektrodenseite (26; 34) hin offen sind.

5. Fluidverteilungsvorrichtung nach Anspruch 4, **dadurch gekennzeichnet, daß** in einem Strömungskanal (22) eine laminare Strömung eines Fluids ausbildbar ist.

6. Fluidverteilungsvorrichtung nach Anspruch 5, **dadurch gekennzeichnet, daß** in dem Strömungskanal (22) mindestens eine Strömungsleiteinrichtung (52) vorgesehen ist, welche derart angeordnet und ausgebildet ist, daß sie in der laminaren Strömung eine räumliche Umschichtung von Fluidschichten bewirkt.

7. Fluidverteilungsvorrichtung nach einem der vorangehenden Ansprüche, **dadurch gekennzeichnet, daß** die Strömungskanäle (22) durch Materialkomprimierung und/oder Materialabtragung gebildet sind.

8. Fluidverteilungsvorrichtung nach einem der vorangehenden Ansprüche, **dadurch gekennzeichnet, daß** die Strömungskanäle (22) durch Prägung gebildet sind.

9. Fluidverteilungsvorrichtung nach einem der vorangehenden Ansprüche, **dadurch gekennzeichnet, daß** ein Querschnitt eines Strömungskanals (22) erheblich größer ist als eine mittlere Porengröße in der Beschichtung (16).

10. Fluidverteilungsvorrichtung nach einem der vorangehenden Ansprüche, **dadurch gekennzeichnet, daß** ein makroskopischer Strömungskanal (22) durch das Porensystem der Beschichtung (16) begrenzt ist.

11. Fluidverteilungsvorrichtung nach einem der vorangehenden Ansprüche, **dadurch gekennzeichnet, daß** Wände (24) eines Strömungskanals (22) aus porösem Material sind.

12. Fluidverteilungsvorrichtung nach einem der vorangehenden Ansprüche, **dadurch gekennzeichnet, daß** ein Strömungskanal (22) einen Kanalgrund (30) aufweist, welcher in einem Abstand zu dem Träger (12) liegt.

13. Fluidverteilungsvorrichtung nach einem der vorangehenden Ansprüche, **dadurch gekennzeichnet, daß** die Beschichtung (16) eine Grundschicht (18) umfaßt, welche auf dem Träger (12) angeordnet ist.

14. Fluidverteilungsvorrichtung nach einem der vorangehenden Ansprüche, **dadurch gekennzeichnet, daß** das Porensystem der Beschichtung (16) eine Pufferwirkung für Reaktionsgas und/oder Reaktionsprodukte aufweist.

15. Fluidverteilungsvorrichtung nach einem der vorangehenden Ansprüche, **dadurch gekennzeichnet, daß** das Beschichtungsmaterial aus einer Mischung hergestellt ist, welche Kohlenstoff und Bindemittel umfaßt.

16. Fluidverteilungsvorrichtung nach Anspruch 15, **dadurch gekennzeichnet, daß** die Mischung Hydrophobierungsmittel umfaßt.

17. Fluidverteilungsvorrichtung nach Anspruch 15 oder 16, **dadurch gekennzeichnet, daß** die Mischung hydrophile Mittel umfaßt.

18. Fluidverteilungsvorrichtung nach einem der vorangehenden Ansprüche, **dadurch gekennzeichnet, daß** die Beschichtung (16) auf dem Träger (12) ein elektrisch leitendes Material umfaßt.

19. Fluidverteilungsvorrichtung nach einem der vorangehenden Ansprüche, **dadurch gekennzeichnet, daß** die Beschichtung (16) einen Werkstoff umfaßt und/oder die Fluidverteilungsvorrichtung derart aufgebaut ist, daß Reaktionsgas von Katalysatorgiften elektrochemisch reinigbar ist.

20. Fluidverteilungsvorrichtung nach einem der vorangehenden Ansprüche, **dadurch gekennzeichnet, daß** Kanalabmessungen der Strömungskanäle (22) und/oder Porosität der Beschichtung (16) und/oder Abstand eines Kanalgrunds (30) zum Träger (12) räumlich variieren.

21. Fluidverteilungsvorrichtung nach einem der vorangehenden Ansprüche, **gekennzeichnet durch** eine Ausbildung als Bipolarplatte.

22. Fluidverteilungsvorrichtung nach Anspruch 21, **dadurch gekennzeichnet, daß** beidseitig des Trägers (12) eine Beschichtung (16) mit darin angeordneten makroskopischen Strömungskanälen (22) vorgesehen ist.

23. Brennstoffzelle oder Brennstoffzellenstapel mit mindestens einer Elektroden-Membran-Einheit (56; 60), wobei die Elektroden (54; 58) mit einer Fluidverteilungsvorrichtung gemäß einem der vorangehenden Ansprüche verbunden sind.

24. Verfahren zur Herstellung einer Fluidverteilungsvorrichtung für eine elektrochemische Elektrode, bei der auf einem gasdichten Träger eine Beschichtung aus einem porösen Material aufgebracht wird und in die Beschichtung eine Mehrzahl von makroskopischen Strömungskanälen durch Materialkomprimierung und/oder Materialabtragung eingebracht wird.

25. Verfahren nach Anspruch 24, **dadurch gekennzeichnet, daß** die Strömungskanäle eingeprägt werden.

26. Verfahren nach Anspruch 25, **dadurch gekennzeichnet, daß** die Strömungskanäle mittels einer Prägungswalze hergestellt werden.

27. Verfahren nach einem der Ansprüche 24 bis 26, **dadurch gekennzeichnet, daß** bei der Herstellung der Strömungskanäle Strömungsleiteinrichtungen in diesen hergestellt werden.

28. Verfahren nach einem der Ansprüche 24 bis 27, **dadurch gekennzeichnet, daß** die Beschichtung auf den Träger aufgewalzt oder aufgesprüht wird.

29. Verfahren nach Anspruch 28, **dadurch gekennzeichnet, daß** die Beschichtung mittels einer Prägewalze aufgewalzt wird.

30. Verfahren nach einem der Ansprüche 24 bis 29, **dadurch gekennzeichnet, daß** vor Aufbringen der porösen Beschichtung eine Grundschicht auf den Träger aufgebracht wird.

31. Verfahren nach Anspruch 30, **dadurch gekennzeichnet, daß** die Grundschicht aufgewalzt oder aufgesprüht wird.

## Claims

1. Fluid distribution device for an electrochemical electrode (54; 58) comprising a gastight carrier (12) which bears on a least one side (14; 32) a coating (16) consisting of a porous material, a plurality of macroscopic flow channels (22) being formed in the coating (16).

2. Fluid distribution device according to claim 1, **characterised in that** the carrier (12) is produced from an electrically conductive material.

3. Fluid distribution device according to either claim 1 or claim 2, **characterised in that** the carrier (12) is produced from a material which is chemically inert with respect to reaction gases used.

4. Fluid distribution device according to any one of the preceding claims, **characterised in that** the flow channels (22) are open towards an electrode side (26; 34).

5. Fluid distribution device according to claim 4, **characterised in that** a laminar flow of a fluid can be developed in a flow channel (22).

6. Fluid distribution device according to claim 5, **characterised in that** provided in the flow channel (22) is at least one flow directing means (52) which is arranged and configured such that it causes a spatial rearrangement of fluid layers in the laminar flow.

7. Fluid distribution device according to any one of the preceding claims, **characterised in that** the flow channels (22) are formed by material compression and/or material removal.

8. Fluid distribution device according to any one of the preceding claims, **characterised in that** the flow channels (22) are formed by impression.

9. Fluid distribution device according to any one of the preceding claims, **characterised in that** a cross section of a flow channel (22) is considerably greater than an average pore size in the coating (16).

10. Fluid distribution device according to any one of the preceding claims, **characterised in that** a macroscopic flow channel (22) is delimited by the pore system of the coating (16).

11. Fluid distribution device according to any one of the preceding claims, **characterised in that** walls (24) of a flow channel (22) consist of porous material.

12. Fluid distribution device according to any one of the preceding claims, **characterised in that** a flow channel (22) has a channel bottom (30) which is at a spacing from the carrier (12).

13. Fluid distribution device according to any one of the preceding claims, **characterised in that** the coating (16) comprises a base layer (18) which is arranged on the carrier (12).

14. Fluid distribution device according to any one of the preceding claims, **characterised in that** the pore system of the coating (16) has a buffer effect for reaction gas and/or reaction products.

15. Fluid distribution device according to any one of the preceding claims, **characterised in that** the coating material is produced from a mixture comprising carbon and binder.

16. Fluid distribution device according to claim 15, **characterised in that** the mixture comprises hydrophopic agents.

17. Fluid distribution device according to either claim 15 or claim 16, **characterised in that** the mixture comprises hydrophilic agents.

18. Fluid distribution device according to any one of the preceding claims, **characterised in that** the coating (16) on the carrier (12) comprises an electrically conductive material.

19. Fluid distribution device according to any one of the preceding claims, **characterised in that** the coating (16) comprises a material and/or the fluid distribution device is constructed such that reaction gas can be cleaned electrochemically of catalyst poisons.

20. Fluid distribution device according to any one of the preceding claims, **characterised in that** channel dimensions of the flow channels (22) and/or the porosity of the coating (16) and/or the spacing of the bottom (30) of a channel from the carrier (12) vary spatially.

21. Fluid distribution device according to any one of the preceding claims, **characterised by** a configuration as a bipolar plate.

22. Fluid distribution device according to claim 21, **characterised in that** provided on both sides of the carrier (12) is a coating (16) with macroscopic flow channels (22) arranged therein.

23. Fuel cell or fuel cell stack with at least one electrode-membrane unit (56; 60), wherein the electrodes (54; 58) are connected to a fluid distribution device according to any one of the preceding claims.

24. Method for the production of a fluid distribution device for an electrochemical electrode, wherein a coating consisting of a porous material is applied to a gastight carrier and a plurality of macroscopic flow channels are introduced into the coating by material compression and/or material removal.

25. Method according to claim 24, **characterised in that** the flow channels are impressed.

26. Method according to claim 25, **characterised in that** the flow channels are produced by an impression roller.

27. Method according to any one of claims 24 to 26, **characterised in that** during the production of the flow channels, flow directing means are produced therein.

28. Method according to any one of claims 24 to 27, **characterised in that** the coating is rolled or sprayed onto the carrier.

29. Method according to claim 28, **characterised in that** the coating is applied by rolling using an impression roller.

30. Method according to any one of claims 24 to 29, **characterised in that** before the porous coating is applied, a base layer is applied to the carrier.

31. Method according to claim 30, **characterised in that** the base layer is rolled on or sprayed on.

## Revendications

1. Système de répartition de fluide pour une électrode électrochimique (54 ; 58) avec un support (12) étanche aux gaz, lequel supporte sur au moins une face (14 ; 32) un revêtement (16) composé d'un matériau poreux, une pluralité de canaux d'écoulement (22) macroscopiques étant formée dans le revêtement (16).

2. Système de répartition de fluide selon la revendication 1, **caractérisé en ce que** le support (12) est réalisé dans un matériau électriquement conducteur.

3. Système de répartition de fluide selon la revendication 1 ou la revendication 2, **caractérisé en ce que** le support (12) est réalisé dans un matériau chimiquement inerte par rapport aux gaz de réaction mis en oeuvre.

4. Système de répartition de fluide selon l'une des revendications précédentes, **caractérisé en ce que** les canaux d'écoulement (22) sont ouverts vers un côté d'électrode (26 ; 34).

5. Système de répartition de fluide selon la revendication 4, **caractérisé en ce qu'**un écoulement laminaire d'un fluide est réalisable dans un canal d'écoulement (22).

6. Système de répartition de fluide selon la revendication 5, **caractérisé en ce qu'**au moins un dispositif de guidage de flux (52) est prévu dans le canal d'écoulement (22), lequel est disposé et réalisé de manière à provoquer une modification de la distribution spatiale des couches de fluides dans l'écoulement laminaire.

7. Système de répartition de fluide selon l'une des revendications précédentes, **caractérisé en ce que** les canaux d'écoulement (22) sont formés par compression de matériau et/ou enlèvement de matériau.

8. Système de répartition de fluide selon l'une des revendications précédentes, **caractérisé en ce que** les canaux d'écoulement (22) sont formés par estampage.

9. Système de répartition de fluide selon l'une des revendications précédentes, **caractérisé en ce qu'**une section transversale d'un canal d'écoulement (22) est sensiblement supérieure à une grosseur moyenne de pore dans le revêtement (16).

10. Système de répartition de fluide selon l'une des revendications précédentes, **caractérisé en ce qu'**un canal d'écoulement macroscopique (22) est délimité par le système de pores du revêtement.

11. Système de répartition de fluide selon l'une des revendications précédentes, **caractérisé en ce que** des parois (24) d'un canal d'écoulement (22) sont en matériau poreux.

12. Système de répartition de fluide selon l'une des revendications précédentes, **caractérisé en ce qu'**un canal d'écoulement (22) comporte un fond de canal (30) situé à intervalle du support (12).

13. Système de répartition de fluide selon l'une des revendications précédentes, **caractérisé en ce que** le revêtement (16) comprend une couche de base (18) disposée sur le support (12).

14. Système de répartition de fluide selon l'une des revendications précédentes, **caractérisé en ce que** le système de pores du revêtement (16) présente un effet de tampon pour des gaz de réaction et/ou des produits de réaction.

15. Système de répartition de fluide selon l'une des revendications précédentes, **caractérisé en ce que** le matériau de revêtement est réalisé dans un mélange comprenant du carbone et des agents liants.

16. Système de répartition de fluide selon la revendication 15, **caractérisé en ce que** le mélange comprend des agents hydrophobants.

17. Système de répartition de fluide selon la revendication 15 ou la revendication 16, **caractérisé en ce que** le mélange comprend des agents hydrophiles.

18. Système de répartition de fluide selon l'une des revendications précédentes, **caractérisé en ce que** le revêtement (16) sur le support (12) comprend un matériau électriquement conducteur.

19. Système de répartition de fluide selon l'une des revendications précédentes, **caractérisé en ce que** le revêtement (16) comprend un matériau et/ou en ce que le système de répartition de fluide est structuré de telle manière que le gaz de réaction soit électrochimiquement purifiable des poisons de catalyseur.

20. Système de répartition de fluide selon l'une des revendications précédentes, **caractérisé en ce que** les dimensions des canaux d'écoulement (22) et/ou la porosité du revêtement (16) et/ou l'intervalle d'un fond de canal (30) au support (12) varient spatialement.

21. Système de répartition de fluide selon l'une des revendications précédentes, **caractérisé par** une réalisation comme plaque bipolaire.

22. Système de répartition de fluide selon la revendication 21, **caractérisé en ce qu'**un revêtement (16) avec des canaux d'écoulement (22) macroscopiques disposés à l'intérieur est prévu des deux côtés du support (12).

23. Cellule à combustible ou pile de cellules à combustible avec au moins une unité d'électrode à membrane (56 ; 60), les électrodes (54 ; 58) étant reliées à un système de répartition de fluide selon l'une des revendications précédentes.

24. Procédé de fabrication d'un système de répartition de fluide pour une électrode électrochimique, où un revêtement d'un matériau poreux est appliqué sur un support étanche aux gaz et où une pluralité de canaux d'écoulement est ménagée dans le revêtement par compression de matériau et/ou enlèvement de matériau.

25. Procédé selon la revendication 24, **caractérisé en ce que** les canaux d'écoulement sont estampés.

26. Procédé selon la revendication 25, **caractérisé en ce que** les canaux d'écoulement sont réalisés au moyen d'un cylindre d'estampage.

27. Procédé selon l'une des revendications 24 à 26, **caractérisé en ce que** des dispositifs de guidage de flux sont réalisés dans les canaux d'écoulement lors de la réalisation de ceux-ci.

28. Procédé selon l'une des revendications 24 à 27, **caractérisé en ce que** le revêtement est laminé ou atomisé sur le support.

29. Procédé selon la revendication 28, **caractérisé en ce que** le revêtement est laminé au moyen d'un cylindre graveur.

30. Procédé selon l'une des revendications 24 à 29, **caractérisé en ce qu'**une couche primaire est appliquée sur le support avant l'application du revêtement poreux.

31. Procédé selon la revendication 30, **caractérisé en ce que** la couche primaire est laminée ou atomisée.
